# EUROPEAN PATENT SPECIFICATION

(11) **EP 0 962 145 B1**
(45) Date of publication and mention of the grant of the patent: **25.09.2002**
(21) Application number: 98500133.8
(22) Date of filing: 04.06.1998
(51) Int. Cl.: A22C 13/00

(54) **Biaxially oriented, by hand fillable, tubular film for packaging and food stuffs**
Biaxial verstreckte, handfüllbare, Schlauchfolie zur Verpackung und Umhüllung von Lebensmitteln
Gaîne biaxialement orientée, remplissable à la main, pour l'emballage et l'enveloppement de produits alimentaires

(43) Date of publication of application: 08.12.1999
(73) Proprietor: Naturin GmbH & Co, D-69469 Weinheim (DE)
(72) Inventor: Grund, Hartmut, 67166 Otterstadt (DE); Lang, Horst, 69469 Weinheim (DE); Schauer, Helmut, 69309 Mannheim (DE)
(74) Representative: Carpintero Lopez, Francisco

(56) References cited:
- EP-A- 0 006 528
- EP-A- 0 065 278
- EP-A- 0 722 664
- EP-A- 0 826 731
- WO-A-97/03113
- WO-A-97/38043
- DE-A- 3 811 544
- US-A- 3 763 082
- US-A- 4 461 808

## Description

This invention relates to a tubular, biaxially oriented, mono- or multilayer film for foodstuffs, in particular pasty foods e.g., sausages, consisting of at least one layer composed of a mixture of copolyamides, said film showing very good flexibility properties and a certain degree of surface roughness that improves the holding of the casing by hand during a manual stuffing process.

By hand fillable casings for foodstuffs, and in particular sausages, should encompass the following characteristics:
1) The casing should have well balanced flexibility properties, so that on the one hand the stuffing diameter can easily be reached, but on the other hand the sausage keeps the cylindrical form after cooking without showing a pear like appearance.
2) The casing should have a coarse surface, so that the casing can be held by hand easily during the manual stuffing process and does not slide out of the hand.
3) The casing should enclose the packaged content after cooking and cooling in a wrinkle free manner,irrespective of the volume reduction during cooling.
4) The casing should not crack or break when being stuffed and cooked. It should show good resistance during temperature increase.
5) The casing should have an adequate oxygen and water vapour barrier, in order to avoid a discolouration of the sausage surface and to prevent weight loss during storage.
6) The casing should adhere to the meat filling to prevent deposition of jelly between the casing and the filling.
7) The casing should be easy to print and should provide good adhesion of the printing ink during cooking.
8)The production of the casing should be economically and easily made.
9) The casing should be ecologically acceptable, in particular it should not contain chlorine compounds and heavy metals that impair the incineration.

There is no suggestion in the prior art documents as how to obtain a casing encompassing all the properties required and expected from the point of view of manufacturers and butchers, as well as from the point of view of consumers.

### TECHNICAL BACKGROUND OF THE INVENTION

It is well known that mixtures of copolycondensates with homopolycondensates provide more flexible final products, and eventually, more transparent ones (Polyamide, Carl Hanser Verlag, page 225, Münich, 1966).

Casings with only one or more copolyamides are also well known in the art:
DE 17 70 406 discloses transparent copolyamides for making shrinkable films. These copolyamides are partially composed of terephthalic and/or adipic acid salts, as well as trimethylhexamethylene diamine and/or isophorone diamine. However, these copolyamides absorb very little water; therefore the glass transition temperature can not be shifted in a large extent to lower temperatures under 0°C, during moisture absorption. The shifting of the glass transition temperature towards lower values is desirable since it favours the multiaxial stretching of the casing.

The same copolyamides disclosed in the preceding patent are used in DE 19 05 539 for making polyamide shrinkable flat or tubular sheets.

DE 19 65 479 discloses copolyamides with 35 to 95% of PA 12 units (aminododecanoic acid or lauric lactam), and 65 to 5% of units obtained by transformation of terephthalic acid or isomers thereof, or an aliphatic dicarboxylic acid (adipic acid), with trimethylhexamethylene diamine, isophorone diamine or aliphatic diamines. These copolyamides are used for manufacturing at least monolayered, eventually shrinkable flat or tubular sheets; however, as those casings disclosed in DE 17 70 406, they also absorb a small amount of water and subsequently the glass transition temperature can not be shifted to lower temperatures in the desired extent.

DE 28 50 181 (Naturin) discloses a shrinkable, biaxially oriented tubular casing, composed of a mixture of at least an aliphatic polyamide and at least an ionomeric resin and/or a polymerisate composed of ethylene, an ester of an aliphatic unsaturated carboxylic acid and an unsaturated carboxylic acid, or said polymerisate is an ethylene-vinyl acetate copolymer. According to the specification also copolyamides are considered. The obtained casing does not tend to tear after being cut as others previously disclosed. However, neither is something suggested in this patent about how to increase the flexibility of the casing through a specific combination of copolyamides, nor how to facilitate the holding of the casing.

DE 28 50 182 (Naturin) discloses a monolayered, biaxially oriented, shrinkable casing, composed of polyamides selected of the group consisting of PA 6, PA 7, PA 66 and PA 610 and all of them can be used alone or in combination. Copolymers of all these PA with each other or with PA 11 and PA 12 are also contemplated in this patent.

DE 32 27 945 (Naturin) has as a main object to improve the casings described in DE 28 50 181 and DE 28 50 182. DE 32 27 945 describes a monolayer tubular sheet composed of polyamide, which can absorb a water amount equivalent to at least 5 % by weight and further characterized by a specific elastic behaviour. In the composition of this layer according to claim 3 also copolyamides can be included, such as copolyamide composed of caprolactam, hexamethylene diamine and adipic acid units. There is no disclosure of any copolyamide mixture of the type of the mixtures of the present invention.

EP 248 860 (Naturin) has as main object to improve the casings disclosed in the three preceding mentioned patents. Thus, an object of this patent is to obtain, as a result of the water absorption capacity of the polyamides used, casings with a good impact penetration strength, a good impact penetration length, meeting specific requirements related to the ball compression test (DIN 53 375), to friction test (DIN 53 375) and requirements related to the pressure to be supported without rupture. It discloses a food stuffs casing comprising polyamides, mixtures of polyamides and/or copolyamides including these (co-)polyamides units of caprolactam and/or hexamethylene diamine and/or adipic acid. The casings encompass technical features as the capacity of absorbing a specified amount of water according to the object mentioned above.

EP 331 509-A2 (priority from JP-51187/88) has as a main object to provide a laminated film with good stretchability, heat-shrinkability, barrier properties and dimensional stability. It discloses a laminated film comprising at least two layers including different aliphatic polyamide resins and a saponified ethylenevinylacetate copolymer (EVOH resin). Within the group of polyamides also copolyamides can be found, as PA 6/12 and PA 6/69; however neither they appear forming a mixture similar to the mixtures of the present invention, nor there is a suggestion of solving the flexibility and/or the slippery surface problems as in the invention claimed now.

EP 530 549 discloses a casing with at least three layers such as an outer layer composed of olefinic (co)polymers, a core layer composed of at least an oxygen barrier consisting of EVOH and a partially aromatic and/or aliphatic (co)polyamide, and an inner layer consisting of polyamide or copolyamide, more especifically, at least one copolyamide. The reason for using polyamides is that they have a high melting point ensuring that they do not melt during boiling or cooking. Furthermore, the polyamides of the inner layer are in addition able to provide a good adhesion of the wall of the casing to the food stuff. Preferably the copolyamide contains a major amount of caprolactam.

DE 41 28 081 describes a multilayer, biaxially stretched tubular film consisting of at least three layers, including as outer layer at least one layer of olefinic (co-)polymers, as core layer at least one oxygen-blocking layer of EVOH, aromatic and/or aliphatic (co-)polyamide and as inner layer at least one water vapour blocking layer of aliphatic (co-)polyamide.

DE 41 30 486 discloses a five layer, coextruded, biaxially stretched tubular film, built up of at least three polyamide and/or copolyamide layers forming the core, inner and outer layer. Layers of EVOH or of a primer are positioned between these layers. The primer layers consisting of polymers of propylene or ethylene having functional groups acting as water vapour barrier.

DE 43 39 337 (Naturin) describes casings made with the purpose of improving the ability of avoiding weight loss during storage without cooling, the occurrence of wrinkles on the packaged products during storage at room temperature instead of in cold store, and the color change of the filling surface. Accordingly, the casings described therein are composed of a five layer coextruded, optionally biaxially oriented and heat-set tubular packaging film, which film is built up of a thin inner and a thick outer layer, consisting of the same polyamide, copolyamide and/or polyamide blend, a core of polyolefin layer, and two primer layers consisting of the same material and positioned at both sides of the core polyolefine layer.

German patent DE 195 01 834-A1 (1995) is related to a tubular casing based on polyamide, and preferably intended for mechanical stuffing and for cooked or boiled sausages. This casing is said to be prepared with the object of improving flexibility, and is based on a major amount of PA 6. Although the layer compositions described therein contain PA 6/12, PA 6/69, or mixtures of both, the total amount of the two copolyamides, when they are simultaneously present, does not exceed from 50% of the whole monolayer. Further patents are cited therein including monolayer casings, but they do not contain the mentioned copolyamides. DE 195 01 834-A1 mentions the elongation rate of the casing, and the flexibility obtained with the casing described therein is said to be better without any further explanation on that.

As it may be inferred from the prior art, the use of copolyamides as components of food casings is largely extended. All the patents mentioned in the foregoing are devoted to solve problems like the shifting of the glass transition temperatures of the polyamides to lower values, to avoid the deposition of jelly between casing and the filling, to the obtention of good gas and water vapour barriers through the inclusion of additional layers such as EVOH copolymer, etc., which results in a more expensive finished products. Moreover, although copolyamides are less expensive than the known cellulose casings, some essential problems related to the stuffing process, as well as others related to the quality of the finished product are not solved by the prior art. On one side, the problem of the high pressure needed for holding the casing by hand during the manual stuffing process due to the insufficient flexibility and lack of surface roughness, with the subsequent higher effort and lower yield obtained in the stuffing process is not solved by the prior art. Consequently, the problem of small butchers considering that most of them practice the manual stuffing procedure, and they do not use sophisticated equipments is also not solved by the prior art.

Thus the prior art does not provide satisfactory answers to the market need for a plastic casing suitable in manual stuffing and clipping or tying by hand.

Therefore, it has proven to be necessary to have a casing which can be easily clipped or tied by hand and may be held by hand during the stuffing operation without harming the hands and wrists of the person stuffing it. To obtain such a casing, a degree of flexibility higher than the known casings, as well as a better gripping capacity are needed.

On the other hand, it is necessary that such flexibility be not excessive because the casing with excess of flexibility would suffer from the so-called "pear effect", consisting in a deformation of the sausage when cooked hanging.

The mentioned problems are solved with the casings of the present invention as it will be described below.

### DESCRIPTION OF THE INVENTION

It is a main object of this invention to provide a casing which can be easily stuffed and held by hand in manual stuffing and may be clipped or tied without the need of the strength used in automatic stuffing machines, or the requirement of special equipment, which is ecologically harmless, has good flexibility properties and is easy to handle, and overcomes all the disavantages associated with the casings known sofar.

It is another object of the present invention to provide a casing with a certain degree of surface roughness, which allows a better handling, and in particular which facilitates the hand stuffing of said casing.

The present invention is further intended for solving the problem of small butchers, who do not possess a sophisticated equipment, and who manufacture their products by hand, i.e. the stuffing is made manually.

The present invention provides a tubular biaxially oriented casing composed of at least one layer, said layer including a first component being a mixture of at least two copolyamides and a second component being a substance that imparts roughness to the surface of the casing. In a preferred embodiment of the present invention these copolyamides are PA 6/12 and PA 6/69, but other combinations of monomers are also within the scope of the invention claimed herein. These particular copolyamides are in a ratio such as PA 6/12 forms the main component of the layer, being present in an amount of about 68 % to about 98,5%. In a most preferred embodiment the amount of PA 6/12 ranges between about 85 % and about 95 % of the total weight.

A preferred amount of copolyamide PA 6/69 ranges between about 1 % and about 25 % of the total weight, and most preferably between about 5 % and about 15 % of the total weight. An excessive amount of PA 6/69 results in a casing with too much flexibility, which shows as finished sausage a bad calibre consistency after cooked hanging with an appearance like a pear.

Furthermore, the monolayer of the present invention includes a second component, which is a substance, approved to be in contact with food. Such substance can be an inorganic substance, for instance, an inorganic oxide or a water insoluble metal salt. The second component can also be an organic substance, with the proviso that said substance has a high melting point in order to resist the temperatures of the manufacturing process, which can be up to 270°C, as well as the temperatures during use. As organic substance certain salts of organic acid can be used.

The average particle diameter of the substance building the second component of the layer must be smaller than the wall thickness. In order to get an enough rough surface, the particle size has not to be too small and at the same time also not too big, since otherwise the casing will burst during the orientation step.

Inorganic substances are preferred to organic ones due to their resistance to manufacturing process temperatures and processing temperature of the sausage encased therein. Morevoer, organic compounds are, normally, more expensive.

In a preferred embodiment an inorganic substance, preferably an inorganic oxide is used as the second component of the layer. The amount of the inorganic substance can range between about 0.5 % and about 7 % by weight, most preferably between 0.7 % and 5 % by weight. In a most preferred embodiment silicon dioxide is used, and the amount preferably ranges between 0.8 and 3 % of the total weight.

There is no limitation with respect to the diameter of the tubular casing according to the invention and a wide range of different diameters for said casing can be achieved. There is also no limitation with respect to the aspect of the casing which can be straight or curved.

Colour pigments or dyes approved to be in contact with food can also be added to the copolyamides to give the casing the desired color.

The biaxial orientation of the casing means that a longitudinal as well as a transversal elongation of the thermoplastic extrudate takes place, at temperatures between the glass transition temperature and the melting point. During said elongation process the molecules are oriented in such a way that the elasticity modulus and the strength are considerably increased.

This biaxial stretching or orientation step of casings composed by thermoplastic polymers as polyamides requests a rapid cooling of the primarily extruded tubular film, since otherwise a cristalline overstructure is formed that avoids the subsequent stretching of the casing. If an incorrect biaxial stretching is produced, the result is the formation of bubbles and an irregular diameter of the tubular casing. This point which has been the object of some patents mentioned as pertaining to the state of the art, explains the importance of shifting the glass transition temperatures of the polyamides to lower values.

Tests have been performed in order to evaluate the flexibility of the obtained casings, which results show that casings according to the present invention reveal a higher flexibility after application of a certain pressure, than casings made according to known layer compositions. More especifically, inflation test were performed, whereby the increase of the absolute diameter is measured after the application of a given pressure, which results, shown in Tables 1 and 2, reveal the excellent flexibility properties of the present casings.

In addition, the following tests were performed: test of the surface in order to evaluate the gripping capacity of the casings, tests of softness of the product (subjective impression of the softness of the tubular casing); tests related to the capacity of manual stuffing whereby a subjective impression of the fillability of a number of pieces to the calculated stuffing diameter by hand is determined; test of the appearance of the finished product whereby the results show the lack of wrinkles and the good calibre consistency of the present casings. All these assays were carried out also in comparison with comparative examples represented by casings made according to the prior art. The results of these assays are shown in Table 1 and 2 below.

The advantages shown by the casings of the present invention can be summarized as follows:

The problems associated with the casings of the prior art are solved in the present invention due to the high casings flexibility, obtained using a mixture of these two copolyamides. In particular the problem of the high pressure needed during the stuffing process, and more particularly manual stuffing process is overcome. As a consequence, the casings are more easily used by butchers who are stuffing by hand and who can carry out their work fast and effortlessly. The flexibility of the casings obtained through the present invention is a result of the appropriate ratio of the copolyamides used in the mixture, and particularly of the amount of PA 6/69.

On the other side, a too high amount of PA 6/69 results in a casing with too much flexibility, which shows as finished sausage a bad calibre consistency after cooked hanging with an appearance like a pear, which means that the sausage looses its perfect cylindric form. This is avoided with the casings obtained according to the present invention. Particularly, an amount of PA 6/69 up to 20 % is favourable, however, an amount of PA 6/69 over 20 % is already inacceptable due to the mentioned "pear effect". In this respect it has to be taken into account that a difference in diameter of more than 5 mm is already visible.

The flexibility of the casing is also important for the final manufacturing steps after the stuffing process, i.e. clipping or tying.

The additional problem of the slippery surface of the casings known sofar, is solved as well with the present casing through the use of a small amount of the second component, i.e., the inorganic substance. The inorganic substance added to the layer confers roughness to the outer surface of the casing. A certain roughness is an essential feature of the casings according to the present invention, since it results in a better gripping capacity of the casing. Therefore it can be better handled and manipulated, making the stuffing process, in particular the hand stuffing process, easier and faster.

The roughness of the casing, combined to the wall thickness, provides for an easy to clip material wherein the clip does not slip.

Moreover, the casing is suitable for the production of boiled or cooked sausages as well as for uncooked pasty food stuffs with a good temperature resistance up to at least about 110°C. This casing also shows acceptable gas and water vapour barrier properties.

The casings can be easily printed and have a good adhesion to the printing inks, even during the cooking procedure.

From the economical point of view the casing of the present invention is cheaper than other casings belonging to the state of the art, since it includes less than 30% of PA 6/69, which is the more expensive component of the mixture, whereas a casing such as that disclosed in DE 195 01 834-A1, Example 4, includes at least 30% of PA 6/69.

Therefore it is economically and easily made and accomplished all of the requirements mentioned in the foregoing.

All the components used for making the casings of the present invention are commercially available.

The process for making the casings according to the present invention includes a first step of mixing the components of the copolyamide mixture together with the inorganic substance in the desired ratio. This mixture is plasticized and homogenized in an extruder, and a primary tube is extruded. That primary tubing is extruded from an anular slot die and cooled rapidly in order to maintain the partially crystalline polymers in the amorphous condition as far as possible. The primary tube is reheated by means of infrared radiation and/or hot air and simultaneously biaxial stretching thereof is carried out at about 70°C to 140°C. This biaxial stretching is effected between two gas-tight pairs of nip rolls, which run at different circunferential speeds, in the longitudinal direction, and by means of an entrapped air hubble in the transversal direction. Heat-setting to impart dimensional stability to the casing follows the biaxial stretching, with the tubing being subjected to a heat treatment at temperatures between 80°C and 180°C, using infrared radiation.

Depending on the temperature during thermosetting a shrinkable or a non-shrinkable casing is obtained. The casing of the present invention is shrinkable, therefore the temperature at the thermosetting stage ranges between 80 to 120°C. Finally a finished product is obtained by collapsing and winding.

The present invention is illustrated by the examples below, which are not limitative of the scope of the claimed invention.

### EXAMPLES

### Examples 1-3

A dryblend of copolyamide No.1, copolyamide No.2 and a masterbatch containing silicon dioxide is prepared. The kind of copolyamides and the amounts of each component are listed in table 1. The dryblend is plasticized and homogenized in an extruder and the resulting melt fed to a monolayer extrusion head. A primary tube with a diameter of 31 mm and a mean wall thickness of 0.34 mm is produced and cooled rapidly. The primary tube is heated to 102 °C by means of infrared radiation and stretched biaxially at a surface stretching ratio of 9.6. The biaxially stretched tube is heat-set, collapsed and wound. The mean wall thickness of the resulting tubular film is 45 µm, the flat width is 148 mm.

### Example 4+5

A five layer primary tube is produced by feeding five melt streams to a five layer extrusion head, giving a primary tube with the structure A/B/C/B/D, A being the outside layer, D being the inside layer of the tube. The layers A and D consist of mixtures of copolyamide No.1, copolyamide No.2 and silicon dioxide. The layers B are adhesive layers, based on a modified polyolefine, produced by graft reaction of maleic anhydride with polyethylene. C is a layer consisting of LLDPE (linear low density polyethylene). The kind of copolyamides and the amounts of each component are listed in table 2. The primary tube has a diameter of 32 mm and a overall wall thickness of 0.56 mm.The primary tube is cooled rapidly, then reheated to 110 °C by means of infrared radiation and stretched biaxially at a surface stretching ratio of 11.5. The biaxially stretched tube is heat-set, collapsed and wound. The mean overall wall thickness of the resulting tubular film is 65 µm, the flat width is 147 mm.

### Comparative Example 1

Polyamide 6 is plasticized in an extruder and the resulting melt fed to a monolayer extrusion head. A primary tube with a diameter of 31 mm and a mean wall thickness of 0.34 mm is produced and cooled rapidly. The primary tube is heated to 112 °C by means of infrared radiation and stretched biaxially at a surface stretching ratio of 9.2. The biaxially stretched tube is heat-set, collapsed and wound. The mean wall thickness of the resulting tubular film is 44 µm, the flat width is 149 mm.

### Comparative Example 2

A dryblend of polyamide 6 and copolyamide No.2 is prepared. The kind of the copolyamide and the amounts of each component are listed in table 1. The dryblend is plasticized and homogenized in an extruder and the resulting melt fed to a monolayer extrusion head. A primary tube with a diameter of 31 mm and a mean wall thickness of 0.34 mm is produced and cooled rapidly. The primary tube is heated to 109 °C by means of infrared radiation and stretched biaxially at a surface stretching ratio of 9.4. The biaxially stretched tube is heat-set, collapsed and wound. The mean wall thickness of the resulting tubular film is 46 µm, the flat width is 147 mm.

### Comparative Example 3

A five layer primary tube is produced by *f*eeding five melt streams to a five layer extrusion head, giving a primary tube with the structure A/B/C/B/D, A being the outside layer, D being the inside layer of the tube. The layers A and D consist of mixtures of polyamide 6 and copolyamide No.2. The layers B are adhesive layers, based on a modified polyolefine, produced by graft reaction of maleic anhydride with polyethylene. C is a layer consisting of LLDPE. The kind of copolyamides and the amounts of each component are listed in table 2. The primary tube has a diameter of 32 mm and a overall wall thickness of 0.56 mm. The primary tube is cooled rapidly, then reheated to 114 °C by means of infrared radiation and stretched biaxially at a surface stretching ratio of 10.3. The biaxially stretched tube is heat-set, collapsed and wound. The mean overall wall thickness of the resulting tubular film is 64 µm, the flat width is 148 mm.

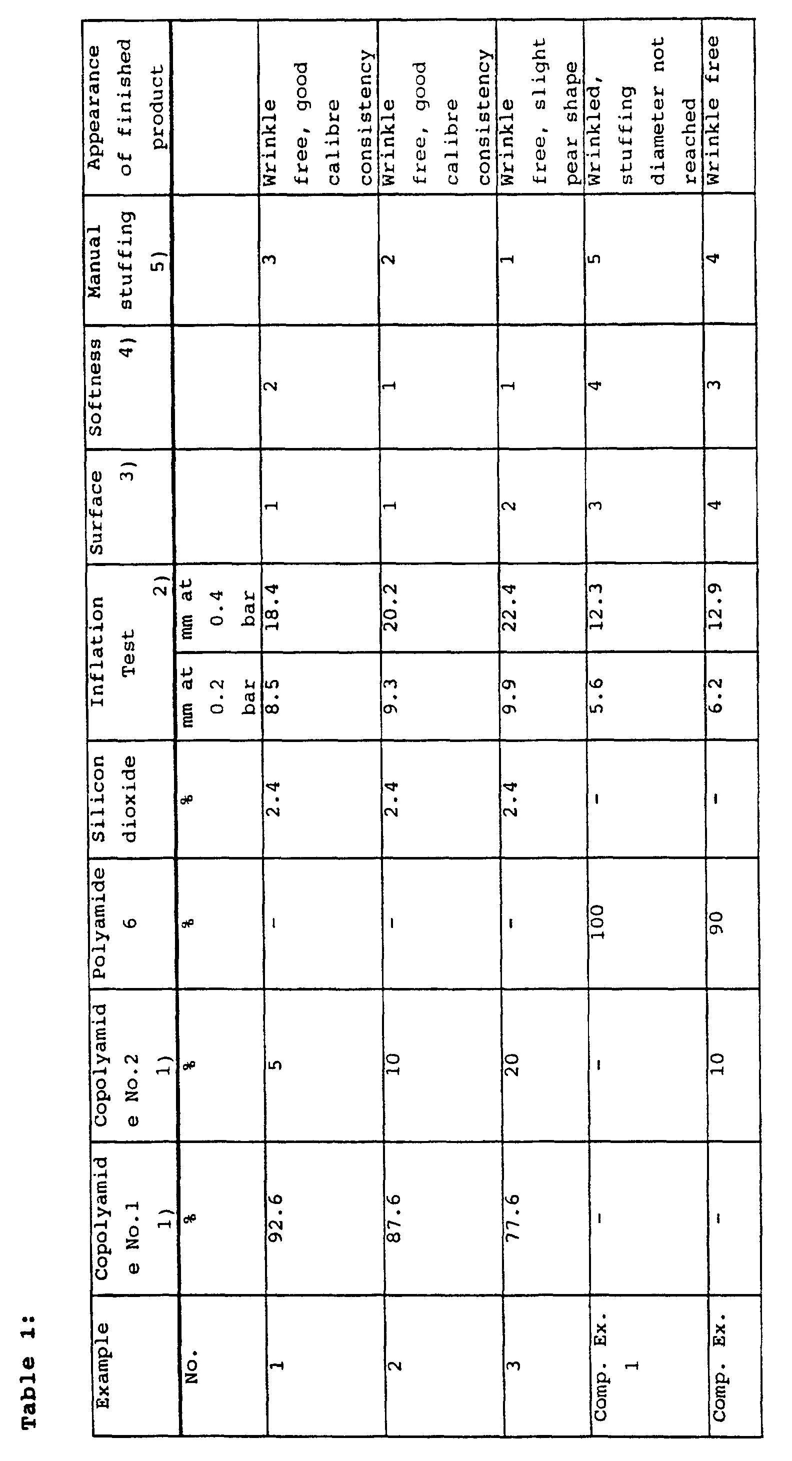

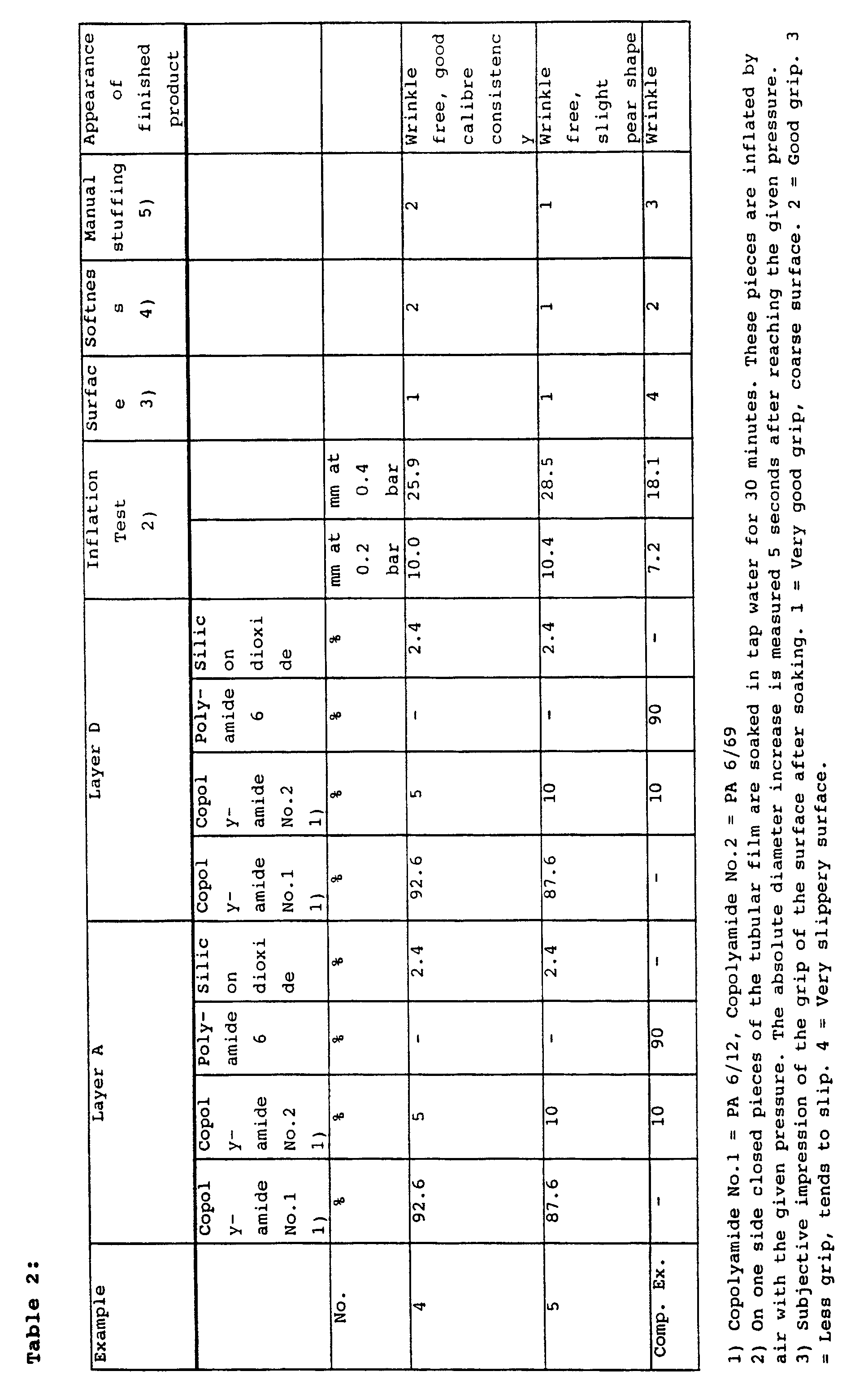

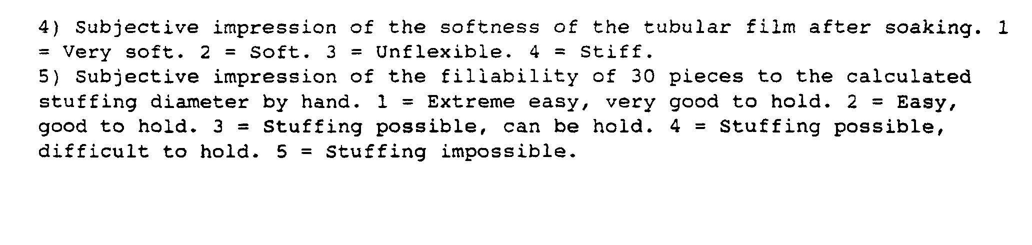

## Claims

1. Tubular film with at least one layer, said layer being biaxially oriented, shrinkable, consisting of at least two components:
a) a first component being a mixture of at least two copolyamides
b) a second component being an inorganic substance that provides the casing with a rough surface

2. Tubular film according to claim 1, wherein one copolyamide is PA 6/12.

3. Tubular film according to claim 1 or 2, wherein one copolyamide is PA 6/69.

4. Tubular film according to claim 1 wherein the two copolyamides are PA 6/12 and PA 6/69.

5. Tubular film according to claims 3-4 wherein the PA 6/69 is present in a range from 1-25 %.

6. Tubular film according to claim 5 wherein the PA 6/69 is present in a range of 5-15 % by weight.

7. Tubular film according to claim 5 wherein the PA 6/69 is present as about 10% of the weight, based on the total weight.

8. Tubular film according to claims 1-5 wherein the inorganic substance is a water insoluble salt.

9. Tubular film according to claims 1-5 wherein the inorganic substance is an inorganic oxide.

10. Tubular film according to claims 1-5 and 7 wherein the inorganic substance is silicon dioxide.

11. Tubular film according to claims 1-8 wherein the inorganic material is present in a range from 0.5 % to 7 %, and most preferably from 1.5 % to 5 %.

12. Tubular film according to claim 1, wherein the component b) is an organic substance, with the proviso that it has resistance to the temperatures used during manufacturing and using.

13. Tubular film according ot claim 1, wherein the component b) is a mixture of an organic substance and an inorganic substance, with the proviso that the organic substance has resistance to the temperatures used during manufacturing and using.

14. Tubular film according to claim 1, wherein pigments or dyes are added.

## Patentansprüche

1. Schlauchfolie mit zumindest einer Schicht, wobei die erwähnte Schicht biaxial verstreckt wird, schrumpffähig ist und aus mindestens zwei Komponenten besteht:
a) einer ersten Komponente, die ein Gemisch aus zumindest zwei Copolyamiden ist und
b) einer zweiten Komponente, die eine anorganische Substanz ist, die der Umhüllung eine rauhe Oberfläche verleiht.

2. Schlauchfolie nach dem Patentanspruch 1, wobei ein Copolyamid PA 6/12 ist.

3. Schlauchfolie nach dem Patentanspruch 1 oder 2, wobei ein Copolyamid PA 6/69 ist.

4. Schlauchfolie nach dem Patentanspruch 1, wobei die beiden Copolyamide PA 6/12 und PA 6/69 sind.

5. Schlauchfolie nach den Patentansprüchen 3 bis 4, wobei das Coplyamid 6/69 in einem Bereich von 1 - 25% vorliegt.

6. Schlauchfolie nach dem Patentanspruch 5, wobei das Copolyamid 6/69 in einem Bereich von 5-15% in Gewicht vorliegt.

7. Schlauchfolie nach dem Patentanspruch 5, bei der das Copolyamid 6/69 in einer Menge von ca. 10% Gewicht, ausgehend vom Gesamtgewicht, vorliegt.

8. Schlauchfolie nach den Patentansprüchen 1 bis 5, bei der die anorganische Substanz ein wasserunlösliches Salz ist.

9. Schlauchfolie nach den Patentansprüchen 1 bis 5, bei der die anorganische Substanz ein anorganisches Oxid ist.

10. Schlauchfolie nach den Patentansprüchen 1 bis 5 und 7, bei der die anorganische Substanz Siliciumdioxid ist.

11. Schlauchfolie nach den Patentansprüchen 1 bis 8, wobei das anorganische Material in einem Bereich von 0,5% bis 7% und vorzugsweise von 1,6% bis 5% vorliegt.

12. Schlauchfolie nach dem Patentanspruch 1, wobei die Komponente (b) eine organische Substanz mit der Bedingung ist, Widerstandsfähigkeit gegen die bei der Herstellung und der Anwendung der Schlauchfolie verwendeten Temperaturen aufzuweisen.

13. Schlauchfolie nach dem Patentanspruch 1, bei der die Komponente (b) ein Gemisch aus einer organischen Substanz und einer anorganischen Substanz ist mit der Bedingung, dass die organische Substanz Widerstandsfähigkeit gegen die bei der Herstellung und der Anwendung der Schlauchfolie verwendeten Temperaturen aufzuweist.

14. Schlauchfolie nach dem Patentanspruch 1, wobei Pigmente oder Farbstoffe hinzugefügt werden.

## Revendications

1. Pellicule tubulaire avec au moins une couche, ladite couche étant biaxialement orientée, contractile, qui consiste en au moins deux composants :
a) un premier composant qui est un mélange d'au moins deux copolyamides et
b) un deuxième composant qui est une substance inorganique qui proportionne à la gaine une superficie rugueuse.

2. Pellicule tubulaire en accord avec la revendication 1, dans laquelle une copolyamide est PA 6/12.

3. Pellicule tubulaire en accord avec la revendication 1 ou 2, dans laquelle une copolyamide est PA 6/69.

4. Pellicule tubulaire en accord avec la revendication 1, dans laquelle les deux copolyamides sont PA 6/12 et PA 6/69.

5. Pellicule tubulaire en accord avec les revendications 3-4, dans laquelle la copolyamide 6/69 est présente dans un intervalle de 1-15% en poids.

6. Pellicule tubulaire en accord avec la revendication 5, dans laquelle la copolyamide 6/69 est présente dans un intervalle de 5-15% en poids.

7. Pellicule tubulaire en accord avec la revendication 5, dans laquelle la copolyamide PA 6/69 est présente en une quantité d'environ 10% en poids, basé sur le poids total.

8. Pellicule tubulaire en accord avec les revendications 1-5, dans laquelle la substance inorganique est un sel insoluble dans l'eau.

9. Pellicule tubulaire en accord avec les revendications 1-5, dans laquelle la substance inorganique est un oxyde inorganique.

10. Pellicule tubulaire en accord avec les revendications 1-5 et 7, dans laquelle la substance inorganique est un dioxyde de silice.

11. Pellicule tubulaire en accord avec les revendications 1-8, dans laquelle la substance inorganique est présente dans un intervalle de 0,5% à 7% et préférablement de 1,6% à 5%.

12. Pellicule tubulaire en accord avec les revendications 1, dans laquelle le composant (b) est une substance organique sous la condition qu'elle résiste aux températures utilisées dans la fabrication et utilisation de la pellicule tubulaire.

13. Pellicule tubulaire en accord avec la revendications 1, dans laquelle le composant (b) est un mélange d'une substance organique et une substance inorganique sous la condition de que la substance organique résiste aux températures utilisées dans la fabrication et utilisation de la pellicule tubulaire.

14. Pellicule tubulaire en accord avec la revendication 1, dans laquelle on ajoute des pigments ou colorants.
